# EUROPEAN PATENT APPLICATION

(11) **EP 2 666 789 A1**
(43) Date of publication of application: **27.11.2013**
(21) Application number: 12168700.8
(22) Date of filing: 21.05.2012
(51) Int. Cl.: C08F 2/32

(54) **Inverse dispersion comprising an anionic or a nonionic polymer and a stabilizing agent**

(71) Applicant: BASF SE, 67056 Ludwigshafen (DE)
(72) Inventor: Benlahmar, Ouidad, 68163 Mannheim (DE)

(57) **Abstract**

An inverse dispersion comprising
i) at least one anionic or one nonionic polymer obtainable by the polymerization of
a) at least one anionic monomer and / or at least one nonionic monomer (compound A),
b) optionally at least one crosslinker (compound B),
c) optionally at least one chain transfer agent (compound C),

ii) at least one stabilizing agent, wherein the stabilizing agent has one or more hydrophobic chains with more than 30 carbon atoms,
iii) at least one non-aqueous carrier

## Description

The present invention relates to an inverse dispersion comprising at least one anionic or one neutral polymer and at least one stabilizing agent, wherein the stabilizing agent has one or more hydrophobic chains with more than 50 carbon atoms. The polymer is obtainable by polymerizing at least one anionic monomer and /or at least one nonionic monomer. Furthermore, the present invention relates to a process for manufacturing the inverse dispersion by inverse emulsion polymerization.

WO03/102043 describes an aqueous formulation comprising a cationic polymer having: a) a water soluble ethylenically unsaturated monomer or blend of monomers comprising at least one cationic monomer; b) at least one cross-linking agent in an amount of more than 50 ppm by the weight of component a); c) and at least one chain transfer agent. The aqueous formulations can be used as thickeners in home care formulations.

EP 1 756 168 discloses spherical microparticles of hydrophilic acrylic polymers, whether anionic or cationic in charge, which have a typical particle size in the range of 0.1 - 2 microns, with an average particle size in the range of 0.5 - 1 micron. The polymeric microparticles are preferably manufactured by methods in which water-soluble vinyl addition monomers are polymerized utilizing a water-in-oil polymerization route. On stirring of any of the above liquid dispersion polymers into an aqueous system, the activator surfactant converts the hydrophobic carrier into an oil-in-water emulsion. By the term "activator surfactant" is meant a surfactant that activates the conversion of the hydrophobic carrier into an oil-in-water emulsion. At the same time the hydrophilic polymer expands on exposure to water but does not dissolve, resulting in a smooth and rapid viscosity increase. Typically the polymer particles swell to give a microparticulate thickening system comprising polymer particles having a typical particle size in the range of 2.5 - 5 microns in diameter. Since the water molecules move into the small polymer particles by osmosis, the osmotic effect experienced by the polymer particle is a balance between water and any electrolyte present in the system. Hence high electrolyte levels reduce the swelling of the polymer particles.

WO 2009/019225 reads on an aqueous dispersion of an alkali-soluble copolymer, said dispersion being suitable as an associative thickener. The copolymer comprises polymerized units of a) at least one ethylenically unsaturated carboxylic acid, b) at least one nonionic ethylenically unsaturated surfactant monomer, c) at least one C₁-C₂-alkyl methacrylate and d) at least one C₂-C₄-alkyl acrylate, where the alkyl chain length averaged over the number of alkyl groups of the alkyl acrylate is 2.1 to 4.0. The associative thickeners can be prepared by emulsion polymerization and are suitable for use in washing and cleaning compositions.

WO 2010/078959 relates to cationic polymer thickeners consisting of a crosslinked water-swellable cationic polymer comprising at least one cationic monomer and optionally nonionic or anionic monomers, said polymer comprising less than 25% of water-soluble polymer chains, based on the total weight of the polymer. The polymer also comprises a crosslinker in a concentration of 500 to 5000 ppm relative to the polymer. The cationic polymer is prepared by inverse emulsion polymerization.

WO 2010/079100 discloses fabric softener compositions comprising polymers according to WO 2010/07895.

US 2008/0312343 reads on inverse latex compositions and to the use thereof as a thickener and/or emulsifier, for example for production of cosmetic or pharmaceutical formulations. The inverse latex compositions comprise at least 50 to 80% by weight of at least one linear, branched or crosslinked organic polymer (P), at least 5 to 10% by weight of a water-in-oil-type emulsifier system, 5 to 45% by weight of at least one oil and up to 5% water. The polymer P comprises uncharged monomers and optionally cationic or anionic monomers. The inverse latex composition may optionally comprise up to 5% by weight of an oil-in-water-type emulsifier system. The inverse latex compositions can be prepared by inverse emulsion polymerization.

EP-A 172 025 relates to a dispersion in a continuous liquid phase of a polymer, which is formed by polymerization of an ethylenically unsaturated monomer comprising a hydrophobic group of at least eight carbon atoms and an ethylenically unsaturated monomer copolymerizable therewith. The dispersion is stable and essentially anhydrous, and comprises at least 40% by weight of polymer. In the polymerization, the copolymerizable, ethylenically unsaturated monomers used may, for example, be anionic monomers. The polymerization can be performed as an inverse emulsion polymerization.

EP-A 172 724 relates to polymers which are prepared by copolymerization of a) an ethylenically unsaturated monomer comprising a hydrophobic group with at least eight carbon atoms and b) water-soluble ethylenically unsaturated monomers. All monomers are soluble as a mixture in water, and the polymer is prepared by inverse emulsion polymerization. The polymer particles have a dry size of < 4 µm. The monomer components b) used may be anionic monomers such as acrylic acid in the form of the free acid or as a water-soluble salt, and nonionic monomers such as acrylamide.

EP-A 172 723 describes a process for flocculating a suspension using a water-soluble, essentially linear polymer with a "single point intrinsic viscosity" of >3. The polymer is a copolymer of two or more ethylenically unsaturated monomers comprising at least 0.5% by weight of a monomer, comprising hydrophobic groups. The polymer may also be a cationic polymer.

Liquid Dispersion Polymer (LDP) compositions are disclosed in WO 2005/097834. These LDP compositions comprise a hydrophilic, water-soluble or swellable polymer with a neutralization content of about 25 to about 100%, a nonaqueous carrier phase and an oil-in-water surfactant. The hydrophilic, water-soluble or swellable polymer is preferably obtained by polymerization, for example of acrylic acid or methacrylic acid. The LDP dispersions are suitable for production of microparticulate thickeners, as used, for example, in aqueous or organic compositions, especially in personal care or pharmaceutical formulations.

The problem underlying the present invention consists in the provision of novel thickeners. The object is achieved by the inverse dispersion according to the invention comprising
i) at least one anionic or one neutral polymer obtainable by the polymerization of
   a) at least one anionic monomer and / or at least one nonionic monomer (compound A),
   b) optionally at least one crosslinker (compound B),
   c) optionally at least one chain transfer agent (compound C),
ii) at least one stabilizing agent, wherein the stabilizing agent has one or more hydrophobic chains with more than 30 carbon atoms, preferably more than 50 carbon atoms,
iii) at least one non-aqueous carrier.

Preferably the ratio of stabilizing agent to anionic polymer lies in the range of from 0.1wt% to 20 wt% even more preferably in the range of from 1wt% to 5wt%.

The inverse dispersions according to the invention are characterized in that they have advantageous properties with regard to low coagulum content, high storage stability, deposition, shear dilution, stabilization and/or viscosity (thickening). Low coagulum is understood in that way that during the inverse emulsion polymerisation process no aggregation between the polymerising dispersed particles is visible because of the high sterical stabilization effect of the inventive stabilising agent. After the polymerisation process the same stabilising agent in addition avoids aggregation or coalescence of the polymer particles, which may be induced by thermal motion, Brownian molecular movement or applied shear stress. Therefore the inverse dispersion has a high storage stability even at elevated temperatures and can easily be pumped at higher speed without inducing any visible coagulum or even any sedimentation of the polymer particles in the continuous oil phase. Moreover, they have the advantage that any redispersion required is achieved very quickly.

When assessing the shear dilution, it is important that the inverse dispersion, after being added to the aqueous formulation like fabric softener, where the phase inversion from an water in oil to an oil in water swollen polymer particle or dissolved polymer molecule is taking place, in its basic state is viscous and thick whereas it is thin upon stirring. The improved shear dilution has a positive effect on the life and properties of pumps during the production of the aqueous fabric softener, promotes convenient dosage for the consumer and promotes the residue-free use of the fabric softener, especially in the washing machines which have an automatic dosing device. The inverse dispersions according to the invention improve the stability of the thickener per se and that of the corresponding formulation. Also in the aqueous formulation containing the inventive polymer after phase inversion the settling or creaming of additionally added particles like vesicles, different soap phases, microcapsules, aluminium flakes or other particles is effectively prevented, irrespective of whether they are within the order of magnitude of nanometers, micrometers or millimeters. Moreover, they have the advantage that any redispersion required and the thickening are achieved very quickly.

Due to the relatively high (water-)soluble components of the polymer, resoiling during a washing operation is reduced. Consequently, the article to be washed, even after repeated washing operations, has clean fibers which have been free effectively of soil particles, such that no graying is detected. Only very slight, if any, adhesion or redistribution of soil particles/polymers on the washed articles is observed, which can then be removed in the next washing cycle avoiding an accumulation effect. Also in that phase of the process the inventive stabilising agent is supporting the stabilisation of the dispersed solid particles, especially with longer hydrophilic B blocks.

A further advantage of the inventive inverse dispersions, in which the neutral or anionic polymer is obtained by inverse emulsion polymerization, is manifested in surfactant-containing formulations, especially in surfactant-containing acidic formulations, because a high thickening performance and/or marked shear dilution are achieved in these formulations even at low thickener concentrations (< 1% by weight).

The inventive inverse dispersion comprises, as component i), at least one anionic or neutral polymer which is obtainable by the polymerization of compound A and optionally B and C, as component ii) a stabilizing agent and as compound iii) a non-aqueous carrier.

### Compound i): Anionic or nonionic Polymer

The compound A used is at least one anionic monomer and / or at least one nonionic monomer. Anionic monomers as such, are known to those skilled in the art.

The anionic monomer if present in compound A is preferably selected from acrylic acid, methacrylic acid, itaconic acid, maleic acid or a salt thereof, in particular the anionic monomer is Na acrylate.

Apart from the nitrogen-containing monomers described below, such as, for example, the compounds according to formula (I), the nonionic monomer if present in component A is selected from esters of the above-described anionic monomers. Such nonionic monomers are preferably the methyl or ethyl esters of acrylic acid or methacrylic acid, such as ethyl acrylate or methyl acrylate. Additionally preferred are the corresponding dimethylamino-substituted esters such as dimethylaminoethyl (meth)acrylate.

Preferably, the nonionic monomer according to compound A in the anionic or nonionic polymer is selected from N-vinylpyrrolidone, N-vinylimidazole or a compound according to the formula (I) 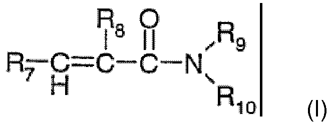 where
R₇ is H or C₁-C₄-alkyl,
R₈ is H or methyl, and
R₉ and R₁₀, independently of one another, are H or C₁-C₃₀-alkyl.

The nonionic monomer is particularly preferably acrylamide, methacrylamide or dialkylaminoacrylamide.

The nonionic monomer may also be an ethylenically unsaturated associative monomer selected from a compound of the following formula

R-O-(CH₂-CHR'-O)ₙ-CO-CR"=CH2

where
R is C₆ - C₅₀ - alkyl, preferably C₈ - C₃₀ - alkyl, especially C₁₆ - C₂₂- alkyl,
R' is H or C₁ - C₄ - alkyl, preferably H,
R" is H or methyl,
n is an integer from 0 to 100, preferably 3 to 50, especially 25.

These compounds can be methacrylates of fatty alcohol ethoxylates.

The R radical in the compounds may also be present as a mixture of radicals with different chain lengths, such as C₁₆ and C₁₈. One example thereof is C₁₆-C₁₈-fatty alcohol-(ethylene glycol)₂₅-ether methacrylate, where both C₁₆ and C₁₈ fatty alcohol radicals (in non-negligible amounts) are present as a mixture. In contrast, for example behenyl-25 methacrylate and cetyl-25 methacrylate, the particular R radical is not present as a mixture but as a C₂₂ or C₁₆ chain. Other chain lengths occur only in the form of impurities. The number "25" in these compounds represents the size of the variables n.

The aqueous phase during the inverse emulsion polymerization may thus comprise, for example, a chain transfer agent, a crosslinker, a cationic monomer and optionally an uncharged monomer, and/or also an associative monomer giving hydrophobic hydrophobic interaction for example via van der Waals forces, and optionally further components. Suitable further components are, for example, complexing agents for salts such as pentasodium diethylenetriaminepentaacetic acid, or compounds which can be used to adjust the pH, such as citric acid.

In a preferred embodiment of the present invention, compound i), i.e. the anionic or neutral polymer is obtainable by the polymerization of at least one anionic monomer and / or at least one nonionic monomer. Preferably, the weight ratio of anionic monomer to nonionic monomer lies in the range of from 0/100 to 10/90, or in the range of from 75/25 to 40/60.

In the preparation of the polymer by polymerization, at least one crosslinker may optionally be present as compound B. Suitable crosslinkers are known to the person skilled in the art. Preferably, in the polymer, the crosslinker according to component B is selected from divinylbenzene; tetraallylammonium chloride; allyl acrylates; allyl methacrylates; diacrylates and dimethacrylates of glycols or polyglycols; butadiene; 1,7-octadiene, allylacrylamides or allylmethacrylamides; bisacrylamidoacetic acid; N,N'-methylenebisacrylamide or polyol polyallyl ethers such as polyallyl sucrose or pentaerythritol triallyl ether. Also suitable as a preferred crosslinker is dialkyldimethylammonium chloride.

Furthermore, during the preparation of the polymer by polymerization, at least one chain transfer agent can be used as compound C. Suitable chain transfer agents are known to the person skilled in the art. Preferred chain transfer agents according to compound C are selected from mercaptan, lactic acid, formic acid, isopropanol or hypophosphites.

Preferably, the inventive inverse dispersion comprises at least one anionic polymer obtainable by the polymerization of
a) 20 to 99.99% by weight, preferably 95 to 99.95% by weight (based on the polymer), of at least one anionic monomer and/or at least one nonionic monomer,
b) 0 to 0.3 % by weight, preferably from 0.0075 to 0.1 %, even more preferably from 0.01 to 0.1 % by weight (based on the polymer), even more preferably from 0.05 to 0.1 % by weight of optionally at least one crosslinker"
c) 0 to 3% by weight, preferably 0.05 to 0.5% by weight (based on the polymer), of optionally at least one chain transfer agent,
in the presence of one stabilizing agent, wherein the stabilizing agent has one or more hydrophobic chains with more than 50 carbon atoms and preferably the ratio of stabilizing agent to anionic polymer lies in the range of from 0.1wt% to 10wt%.

In a further embodiment of the present invention, from 10% to 100% by weight based on the total weight of the anionic or nonionic polymer are water-soluble polymers, preferably 25% to 50% by weight based on the total weight of the cationic polymer of the anionic polymer is soluble in water. The water-soluble polymers of the the anionic or nonionic polymer have a sedimentation coefficient of from 0,1 to 100 Sved, preferably of from 1 to 30Sved in aqueous media. The solubility of the anionic polymer is determined by methods known to those skilled in the art, by admixing the anionic polymer present in the inventive thickener with a defined amount of water (see, for example, EP-A 343 840 or preferably the determination method of the sedimentation coefficient in the unit of svedberg (sved) according to P. Schuck, 'Size-distribution analysis of macromolecules by sedimentation velocity ultracentrifugation and Lamm equation modeling', Biophysical Journal 78,(3) (2000), 1606-1619).

In a further preferred embodiment of the present invention, from 0% to 90% by weight based on the total weight of the anionic or nonionic polymer are crosslinked water-swellable polymers, preferably from 50% to 75% by weight based on the total weight of the the anionic or nonionic polymer. The crosslinked water-swellable polymers have a sedimentation coefficient more than 300 preferably between 600 and 20 000 in aqueous media

In an especially preferred embodiment of the present invention, the proportion of crosslinker (compound B) used in the polymerization of the cationic polymer is less than 1%, preferably less than 0.1% by weight (based on the total amount of compounds A to C).

More preferably, no crosslinker is used in the polymerization of the the anionic or nonionic polymer.

### Compound ii): Stabilizing agent

The inventive inverse dispersion further comprises, as compound ii), at least one stabilizing agent. Stabilizing agents as such are known in principle to those skilled in the art.

Suitable stabilizing agents are preferably surfactants or polymeric emulsifiers.

Surfactants are for example anionic, nonionic, cationic and/or amphoteric surfactants. Preference is given to using anionic and/or nonionic surfactants, which are disclosed, for example, in US2004/0071716 A1.

In the above mentioned state of the art there are described stabilizing agent with low HLB values to stabilise the disperse hydrophilic polymer particles in the hydrophobic continuous phase. These agents have a hydrophilic part like mono or oligo-glucoside or the carbon acid containing part of a copolymer and a hydrophobic part like for example alkyl chains with different lengths. The hydrophilic part is dissolved in the hydrophilic polymer particle and the hydrophobic part is concentrated on the surface of the particle and dissolved in the hydrophobic continuous phase forming a "hydrophobic hairy layer" around the hydrophilic cationic polymer particle. Thus the effect of sterical stabilisation prevents the destabilisation and the coagulation of the hydrophilic particles. The stabilising effect is as important both during the inverse emulsion polymerisation process avoiding larger particles (coagulum) and for the storage stability of the inverse dispersion, avoiding particle sedimentation before it is used in aqueous formulations. The sterical stabilisation is especially also effective in high electrolyte containing dispersions or formulations.

According to the state-of-the-art the length of the hydrophobic part of the emulsifier is not higher than C18 (Stearyl-) or sometimes also C22 (Behenyl-).

According to this invention it was now experimentally shown that more than 30 carbon atoms, preferably more than 50 carbon atoms containing hydrophobic chains of the stabilizing agent is resulting in a dramatic increase of the stabilizing effect for the hydrophilic polymer particles dispersed in the hydrophobic continuous phase. In general are claimed for that purpose all emulsifiers or polymeric stabilizers containing more than 30 carbon atoms, preferably more than 50 carbon atoms in their hydrophobic chains. Optional this hydrophobic chain can be interrupted after every 6, preferred 10 or more carbon atoms by other atoms like oxygen, nitrogen, sulphur, phosphor or by groups like carbonate, isocyanate, carbamide, esters or others in an amount that they do not essentially disturb the hydrophobic character of the chain in order to get the low HLB-values as described below. Block-, graft- or comb- structure, preferably are based on Polyhydroxystearic Acid. In the block-structure the AB- or especially ABA-blocks are preferred. In the ABA block-structure the A block is preferably based on polyhydroxystearic acid and and the B block on polyalkylene oxide.

It is additionally preferred in the context of the present invention to use a stabilizing surfactant which has a (relatively) low HLB (hydrophilic-lipophilic balance) value. The stabilizing agent preferably has an HLB value of 1 to 12, more preferably of 3 to 9 and especially preferably of 5 to 7.

The preferred concentration of these inventive stabilising surfactants lies between 0.1 % and 10% preferably between 1 % to 5% related to the polymer.

The polymeric emulsifiers are a block copolymers having a general formula A-COO-B-OOC-A, in which B is the divalent residue of a water-soluble polyalkylene glycol and A is the residue of an oil-soluble complex monocarboxylic acid. Such polymeric emulsifiers, as well as the preparation thereof, have been disclosed in GB 2002400 and W09607689, the contents of which are herewith incorporated by reference. The emulsifiers, as described in GB2002400, are emulsifiers wherein A has a molecular weight of at least 500 and is the residue of an oil-soluble complex monocarboxylic acid, i.e. a fatty acid. These complex monocarboxylic acids may be represented by the general formula: 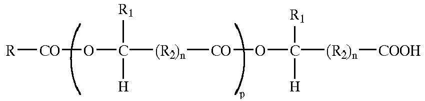 in which
R is hydrogen or a monovalent hydrocarbon or substituted hydrocarbon group;
R1 is hydrogen or a monovalent C1 to C24 hydro- carbon group;
R2 is a divalent C1 to C24 hydrocarbon group;
n is zero or 1;
p is an integer from zero to 200.

The units between the brackets in formula 1 may be all the same or they may differ in respect of R1, R2 and n. The quantity p will not normally have the same unique value for all molecules of the complex acid but will be statistically distributed about an average value lying within the range stated, as is commonplace in polymeric materials. Polymeric component B has a molecular weight of at least 500 and is the divalent residue of a water-soluble polyalkylene glycol having the general formula 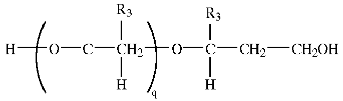 wherein
R3 is hydrogen or a C1 to C3 alkyl group;
q is an integer from 10 up to 500.

Most preferred emulsifiers used in the invention are e.g. PEG 30 Dipolyhydroxystearate. Another similar emulsifier for use with the invention are block copolymers (A-B-A) of polyethylene glycol and polyhydroxystearic acid with a mol weight of approximately 5000.

Furthermore the use of these ABA type block copolymers lead to water-in-oil emulsions having excellent stability during storage thus improving the shelf life of said emulsions. The resulting water-in-oil emulsions are stable and fluid at low temperatures, especially at 25° C.

### Compound iii): non-aqueous carrier

In the inventive thickener, the anionic or neutral polymer may be present dispersed in an oil phase, preferably as an inverse dispersion, water-in-oil dispersion, or as a dispersed anhydrous anionic or neutral polymer in oil.

Suitable high-boiling oils with boiling points above 220°C are oils, for example, 2-ethylhexyl stearate and hydroheated heavy naphtha, and suitable low-boiling oils with boiling points below 220°C, for example, dearomatized aliphatic hydrocarbons or mineral oils of low viscosity.

The present invention further provides a process for the manufacture of an inverse dispersion comprising
i) at least one anionic or neutral polymer obtainable by a polymerisation of
   i) at least one anionic or one nonionic polymer obtainable by a polymerisation of
      a) at least one water-soluble ethylenically unsaturated monomer comprising at least one anionic monomer and /or at least one nonionic monomer,
      b) optionally at least one crosslinker,
      c) optionally at least one chain transfer agent,
ii) at least one stabilizing agent, wherein the stabilizing surfactant has one or more hydrophobic chains with more than 30 carbon atoms, preferably more than 50 carbon atoms,
iii) at least one non-aqueous carrier,
wherein the inverse dispersion is obtained by inverse emulsion polymerization, optionally followed by distillation by means of the liquid dispersion polymer technology.

Preferably, the inverse emulsion polymerization is followed by distillative removal of at least a portion of water and at least a portion of the low-boiling constituents of the oil phase, especially by means of LDP (liquid dispersion polymer) technology

Inverse emulsion polymerization is understood by the person skilled in the art generally to mean polymerization processes according to the following definition: the hydrophilic monomers are dispersed in a hydrophobic oil phase. The polymerization is effected directly in this hydrophilic monomer particle by addition of initiator.

In addition, it is preferred that, after the inverse emulsion polymerization, at least a portion of water and at least a portion of the low-boiling constituents of the oil phase are distilled off, especially by means of LDP technology (Liquid Dispersion Polymer Technology). LDP technology as such is known to those skilled in the art; it is described, for example, in WO 2005/097834.

The information which follows, unless stated otherwise, applies to all kinds of emulsion polymerization, for example to emulsion polymerization in water, which then constitutes the continuous phase, and especially also to inverse emulsion polymerization in which the hydrophobic oil phase constitutes the continuous phase. A suitable polymerization initiator is used for the polymerization. Redox initiators and/or thermally activatable free-radical polymerization initiators are preferred.

Suitable thermally activatable free-radical initiators or the oxidative component of the redox initiator pair are in particular those of the peroxy and azo type. These include hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5-dimethyl-2,5-bis(hydroperoxy)hexane, perbenzoic acid, t-butyl peroxypivalate, t-butyl peracetate, dilauroyl peroxide, dicapryloyl peroxide, distearoyl peroxide, dibenzoyl peroxide, diisopropyl peroxydicarbonate, didecyl peroxydicarbonate, dieicosyl peroxydicarbonate, di-t-butyl perbenzoate, azobisisobutyronitrile, 2,2'-azobis-2,4-dimethylvaleronitrile, ammonium persulfate, potassium persulfate, sodium persulfate and sodium perphosphate.

The persulfates (peroxodisulfates), especially sodium persulfate, are most preferred.

The inverse dispersion can contain a mixture of the oxidizing component of redox initiator like t-Butylhydroperoxide and potassium bromate and the preferred reducing component is sodium hydrogen sulfite.

In the performance of the emulsion polymerization, the initiator is used in a sufficient amount to initiate the polymerization reaction. The initiator is typically used in an amount of about 0.01 to 3% by weight, based on the total weight of the monomers used. The amount of initiator is preferably about 0.05 to 2% by weight and especially 0.1 to 1 % by weight, based on the total weight of the monomers used.

The emulsion polymerization is effected typically at 0°C to 100°C. It can be performed either as a batch process or in the form of a feed process. In the feed method, at least a portion of the polymerization initiator and optionally a portion of the monomers are initially charged and heated to polymerization temperature, and then the rest of the polymerization mixture is supplied, typically over several separate feeds, one or more of which comprise the monomers in pure or emulsified form, continuously or stepwise while maintaining the polymerization. Preference is given to supplying the monomer in the form of a monomer emulsion. In parallel to the monomer supply, further polymerization initiator can be metered in.

In preferred embodiments, the entire amount of initiator is initially charged, i.e. there is no further metering of initiator parallel to the monomer feed.

In a preferred embodiment, the thermally activatable free-radical polymerization initiator is therefore initially charged completely and the monomer mixture, preferably in the form of a monomer emulsion, is fed in. Before the feeding of the monomer mixture is started, the initial charge is brought to the activation temperature of the thermally activatable free-radical polymerization initiator or a higher temperature. The activation temperature is considered to be the temperature at which at least half of the initiator has decomposed after one hour.

In another preferred preparation method, the anionic or neutral polymer is obtained by polymerization of a monomer mixture in the presence of a redox initiator system. A redox initiator system comprises at least one oxidizing agent component and at least one reducing agent component, in which case heavy metal ions are preferably additionally present as a catalyst in the reaction medium, for example salts of cerium, manganese or iron(II).

Suitable oxidizing agent components are, for example, sodium or potassium bromate, peroxides and/or hydroperoxides such as hydrogen peroxide, tert-butyl hydroperoxide, cumene hydroperoxide, pinane hydroperoxide, diisopropylphenyl hydroperoxide, dicyclohexyl percarbonate, dibenzoyl peroxide, dilauroyl peroxide and diacetyl peroxide. Hydrogen peroxide and tert-butyl hydroperoxide are preferred.

Suitable reducing agent components are alkali metal sulfites, alkali metal dithionites, alkali metal hyposulfites, sodium hydrogensulfite, Rongalit C (sodium formaldehydesulfoxylate), mono- and dihydroxyacetone, sugars (e.g. glucose or dextrose), ascorbic acid and salts thereof, acetone bisulfite adduct and/or an alkali metal salt of hydroxymethanesulfinic acid. Sodium hydrogensulfite or sodium metabisulfite is preferred.

Suitable reducing agent components or catalysts are also iron(II) salts, for example iron(II) sulfate, tin(II) salts, for example tin(II) chloride, titanium(III) salts such as titanium(III) sulfate.

The amounts of oxidizing agent used are 0.001 to 5.0% by weight, preferably from 0.005 to 1.0% by weight and more preferably from 0.01 to 0.5% by weight, based on the total weight of the monomers used. Reducing agents are used in amounts of 0.001 to 2.0% by weight, preferably of 0.005 to 1.0% by weight and more preferably of 0.01 to 0.5% by weight, based on the total weight of the monomers used.

A particularly preferred redox initiator system is the sodium peroxodisulfate/sodium hydrogensulfite system, for example 0.001 to 5.0% by weight of sodium peroxodisulfate and 0.001 to 2.0% by weight of sodium hydrogensulfite, especially 0.005 to 1.0% by weight of sodium peroxodisulfate and 0.005 to 1.0% by weight of sodium hydrogensulfite, more preferably 0.01 to 0.5% by weight of sodium peroxodisulfate and 0.01 to 0.5% by weight of sodium hydrogensulfite.

A further particularly preferred redox initiator system is the t-butyl hydroperoxide/hydrogen peroxide/ascorbic acid system, for example 0.001 to 5.0% by weight of t-butyl hydroperoxide, 0.001 to 5.0% by weight of hydrogen peroxide and 0.001 to 2.0% by weight of ascorbic acid, especially 0.005 to 1.0% by weight of t-butyl hydroperoxide, 0.005 to 1.0% by weight of hydrogen peroxide and 0.005 to 1.0% by weight of ascorbic acid, more preferably 0.01 to 0.5% by weight of t-butyl hydroperoxide, 0.01 to 0.5% by weight of hydrogen peroxide and 0.01 to 0.5% by weight of ascorbic acid.

In a preferred embodiment of this invention, both thermal initiators and redox initiators can be used together and one or more components of the used initiator compounds can be pre-fed partially or completely.

The anionic or neutral polymer is preferably prepared by inverse emulsion polymerization, by first separately preparing an aqueous phase of the water-soluble components and an oil phase. Thereafter, the two phases are mixed with one another to obtain a water-in-oil dispersion. The mixture is polymerized by adding a redox initiator system; optionally, another, thermal initiator can subsequently be added or, if already present, thermally activated.

The aqueous phase comprises, for example, a chain transfer agent, a crosslinker, a anionic monomer and / or an uncharged monomer, and optionally also an associative monomer giving hydrophobic-hydrophobic interaction for example via van der Waals forces, and optionally further components. Suitable further components are, for example, complexing agents for salts such as pentasodium diethylenetriaminepentaacetic acid, or compounds which can be used to adjust the pH, such as citric acid.

The oil phase preferably comprises an emulsifier, a stabilizer, a high-boiling oil, and a low-boiling oil. In addition, the oil phase may optionally comprise a nonionic monomer or hydrophobic soluble surfactants, activators inducing the phase change during dilution with water, crosslinkers, chain transfer agents or initiator components..

Emulsifiers, stabilizers, low-boiling oils and high-boiling oils as such are known to those skilled in the art. These compounds can be used individually or in the form of mixtures.

Typical emulsifiers in addition to the stabilizing agent are anionic emulsifiers, for example sodium laurylsulfate, sodium tridecyl ether sulfates, dioctylsulfosuccinate sodium salt and sodium salts of alkylaryl polyether sulfonates; and nonionic emulsifiers, for example alkylaryl polyether alcohols and ethylene oxide-propylene oxide copolymers. Sorbitan trioleate is likewise suitable as an emulsifier.

Preferred emulsifiers have the following general formula:

R-O-(CH₂-CHR'-O)ₙ-X

in which R is C₆-C₃₀-alkyl,
R' is hydrogen or methyl,
X is hydrogen or SO₃M,
M is hydrogen or one alkali metal, and
n is an integer from 2 to 100.

Suitable stabilizers are described, for example, in EP-A 172 025 or EP-A 172 724. Preferred stabilizers are copolymers of stearyl methacrylate and methacrylic acid.

Suitable high-boiling oils are, for example, 2-ethylhexyl stearate and hydroheated heavy naphtha, and suitable low-boiling oils are, for example, dearomatized aliphatic hydrocarbons or mineral oils of low viscosity.

In a preferred embodiment of the present invention, component A (at least one ethylenically unsaturated associative monomer giving hydrophobic hydrophobic interaction for example via van der Waals forces) is completely or partially added to the oil phase in the inverse emulsion polymerization.

In the inverse emulsion polymerization, the temperature can be kept constant or else it can rise. The rise in the temperature can be performed continuously or in stages. For example, the temperature can rise by 0.1 to 10°C per minute during the polymerization, preferably from 0,5 to 3°C per minute. The temperature rise is controlled by the rate of initiator addition. The starting temperature value may be 0 to 30°C, preferably 10 to 20°C.

In another embodiment of the present invention, the temperature in the inverse emulsion polymerization is kept constant (cold method); the temperature is 0 to 30°C, preferably 10 to 20°C. In a further embodiment of the present invention, the temperature is kept constant within a higher temperature range (hot method). The temperature in the polymerization is 40 to 150°C, preferably 70 to 120°C.

In a particularly preferred embodiment of the present invention, the temperature is kept constant during the inverse emulsion polymerization, the temperature being at least 40°C, preferably 50 to 90°C.

If, in the context of the present invention, the temperature is kept constant in a polymerization, especially in an inverse emulsion polymerization, this means that the temperature is kept at a constant value from the start of the polymerization. Variations of +/- 5°C, preferably +/- 2°C and especially +/- 1°C during the polymerization process are considered to be a constant temperature (based on the desired constant temperature value). The temperature is kept constant until the polymerization has ended, which is preferably the case after a conversion of more than 90% of the monomers used, more preferably more than 95% by weight and especially preferably at full conversion (100% by weight). The temperature can be kept constant by removing the heat of reaction which arises by cooling. The start of the polymerization is normally the addition of the polymerization initiator, preferably the addition of a redox initiator system. Normally, the system is first heated to the desired temperature and a constant temperature is awaited while stirring. Subsequently, the polymerization initiator is added, as a result of which the polymerization process commences. In one embodiment of the present invention, the temperature is kept constant at a value above the melting point of the associative monomer used.

In a preferred embodiment of the invention the polymerisation starts at low temperatures and is increasing during the polymerisation as described above until a special temperature is reached and then the polymerisation temperature is kept constant by cooling.

The present invention further provides surfactant-containing acidic formulations comprising at least one inventive inverse dispersion according to the above definitions. The pH of the formulation is 1 to < 7.

The present invention further provides surfactant-containing alkaline formulations comprising at least one inventive inverse dispersion according to the above definitions. The pH of the formulation is 7 to 13.

The inventive inverse dispersion containing -containing acidic or alkaline surfactant-containing aqueous formulations may comprise further ingredients known to those skilled in the art. Suitable ingredients comprise one or more substances from the group of the builders, bleaches, bleach activators, enzymes, electrolytes, nonaqueous solvents, pH modifiers, fragrances, perfume carriers, fluorescers, dyes, hydrotropes, foam inhibitors, silicone oils, antiredeposition agents, optical brighteners, graying inhibitors, antishrink agents, anticrease agents, dye transfer inhibitors, active antimicrobial ingredients, germicides, fungicides, antioxidants, corrosion inhibitors, antistats, ironing aids, hydrophobizing and impregnating agents, swelling and antislip agents, fabric softening compounds and UV absorbers.

In one embodiment of the present invention, the surfactant-containing aqueous formulations , comprise less than 1% by weight of inverse dispersion (based on the overall formulation), the anionic or nonionic polymer of the inverse dispersion being obtained by inverse emulsion polymerization at increasing temperature. Preferably, the formulations comprise 0.01 to < 1% by weight of inverse dispersion.

The present invention further provides for the use of an inventive surfactant-containing acidic formulation in hair cosmetics, in hair styling, as a shampoo, as a softener, as a conditioner, as a skin cream, as a shower gel, as a fabric softener for laundry, or as an acidic detergent, preferably for toilets or baths.

The present invention further provides for the use of a surfactant-containing alkaline formulation as a liquid washing composition or as a machine or manual dishwashing detergent.

The present invention further provides for the use of the inventive thickener as a viscosity modifier, for optimization of shear dilution, as a thickening agent, for stabilization of suspended constituents having a size in the range from nanometers to millimeters and/or in surfactant-containing acidic or alkaline formulations.

The invention is illustrated hereinafter by the examples.

In the examples, the following abbreviations are used:

| **Monomers** | |
|---|---|
| ACM | acrylamide |
| AA | acrylic acid |
| MAA | methacrylic acid |
| NaAc | sodium acrylate |
| BEM | behenyl-25 methacrylate |
| MBA | methylene-bis-acrylamide (crosslinker) |
| | |
| NaHP | sodium hypophosphite (chain transfer agent) |
| C16E025MAc | C₁₆-C₁₈-fatty alcohol-(ethylene glycol)₂₅ ether methacrylate |

| **Others** | |
|---|---|
| pphm | parts per hundred parts of monomers (based on components a) and b)) |

### Examples

### General test methods

Unless stated otherwise, the following general test methods are used in the examples which follow:

### Determination of viscosity in aqueous media

With reference to the methods according to DIN 51550, DIN 53018, DIN 53019, the Brookfield model DV II viscometer is used, unless stated otherwise within the following tables, at the speed of 10 or 60 revolutions per minute with the specified spindle no. 2, 3 or 6 to measure the viscosities reported in mPas.

Determination of viscosity at 25°C of 1wt% aqueous solution product (approximately 50wt% active polymer) - Brookfield viscosity is measured using a Brookfield DVII -fitted with a spindle 3 at 10rpm. The test is conducted in deionised water at 25°C. Initial viscosity is defined as the Brookfield viscosity measured within 35 minutes of making the sample.

Determination of viscosity at 25°C of an aqueous solution containing 0,4wt% product ( approximatively 50wt% active polymer) and 100ppm calcium chloride - Brookfield viscosity is measured using a Brookfield DVII - fitted with a spindle 2 at 60rpm. The test is conducted in 100ppm calcium chloride solution in deionised water at 25°C. Initial viscosity is defined as the Brookfield viscosity measured within 2 hours of making the sample.

Stabilizing agents used in the examples:
Stabilizing agent A (nonionic block copolymer): Polyglyceryl-dipolyhydroxystearate with CASR-Nr. 144470-58-6
Stabilizing agent B is a nonionic ABA-block copolymer with molecular weight of about 5000g/mol, and a hydrophobic lipophilic balance value (HLB) of 5 to 6, wherein the A block is based on polyhydroxystearic acid and and the B block on polyalkylene oxide. 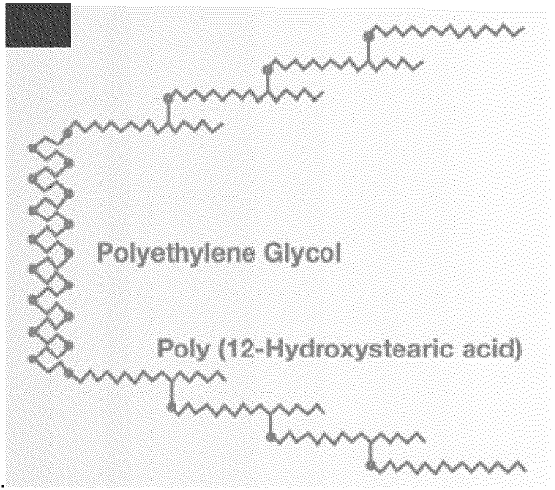
Stabilizing agent C (nonionic block copolymer): PEG-30 Dipolyhydroxystearate, with CASR-Nr. 70142-34-6
Stabilizing agent D (nonionic block copolymer): Alcyd Polyethylenglycol Polyiso-butene stabilizing surfactant with HLB 5-7

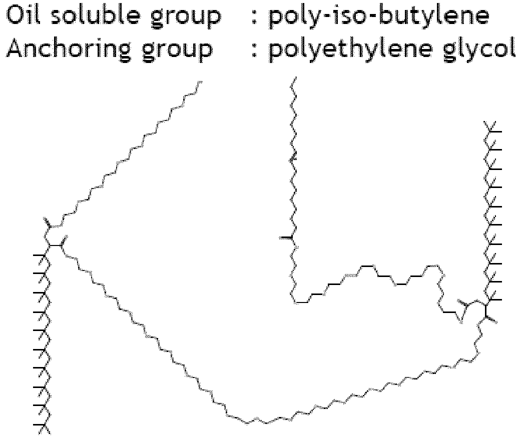

### Comparative Example 1

### Synthesis of the anionic polymer

An aqueous phase of water soluble components is prepared by admixing together the following components:
0.62 g (0.49 pphm) of a 40% solution of penta sodium diethylene triamine penta acetic acid168.77 g (132.4 pphm) of water,
7.65 g (0,06) of methylene-bis-acrylamide (1% aqueous solution),
127.44 g (100.0 pphm) of acrylic acid, and
111.58 g (43.78 pphm) of sodium hydroxide (47% aqueous solution.

An oil phase is prepared by admixing together the following components:
14.6 g (8.6 pphm) of sorbitan mono-oleate,
65.98 g (12.27 pphm) of a polymeric stabilizer stearyl methacrylate-methacrylic acid copolymer (23.7% in solvent (dearomatized hydrocarbon with a boiling point of 187°C),
115.45 g (90.59 pphm) of white mineral oil, Petroleum and
172.3 g (135.2 pphm) of a-dearomatised hydrocarbon solvent with a boiling point of 187°C.

The two phases are mixed together in a ratio of 44.4 parts oil phase to 55.6 parts aqueous phase under high shear to form a water-in-oil emulsion. The resulting water-in-oil emulsion is transferred to a reactor equipped with nitrogen sparge tube, stirrer and thermometer. The emulsion is purged with nitrogen to remove oxygen.

Polymerisation is effected by addition of a redox couple of sodium metabisulphite and tertiary butyl hydroperoxide stepwise such that is a temperature increase of 2°C/min.

After the isotherm is completed addition is made of a free radical initiator 0.15 g (0,12 pphm 2,2'-Azobis(2-methylbutyronitrile), CAS: 13472-08-7)) and the emulsion held at 85°C for 75 minutes.

Vacuum distillation is carried out to remove water and volatile solvent to give a final product of 50% polymer solids.

To this product addition is made of 16.3 g (12.8 pphm) of fatty alcohol ethoxylate.

Examples with stabilizing agents A, C and D lead to comparable results as those obtained when using stabilizing agent B.

### Dispersion 1

### Synthesis of the anionic polymer

This example illustrates the preparation of a suitable anionic polymer with the inventive stabilizing agent.

An aqueous phase of water soluble components is prepared by admixing together the following components:
0.62 g (0.5 pphm) of aqueous solution of pentasodium diethylenetriaminepentaacetate171.56 g (134.6 pphm) of water,
7.65 g (0,06) of methylene-bis-acrylamide (1% aqueous solution),
127.44 g (100.0 pphm) of acrylic acid, and
105.49 g (41.39 pphm) of sodium hydroxide (50% aqueous solution).

An oil phase is prepared by admixing together the following components:
54.8 g (8.6 pphm) of nonionic block copolymer B (20 % in solvent) as stabilizing surfactant, 65,98 g (12.27 pphm) of a polymeric stabiliser stearyl methacrylate-methacrylic acid copolymer (24.85% in solvent with a boiling point betwen 187°C),
115.46 g (90.6 pphm) of white mineral oil, Petroleum, and
137.0 g (107.5 pphm) of adearomatised hydrocarbon solvent with a boiling point of 187°C.

The two phases are mixed together in a ratio of 47.2 parts oil phase to 52.8 parts aqueous phase under high shear to form a water-in-oil emulsion. The resulting water-in-oil emulsion is transferred to a reactor equipped with nitrogen sparge tube, stirrer and thermometer. The emulsion is purged with nitrogen to remove oxygen.

Polymerisation is effected by addition of a redox couple of sodium metabisulphite and tertiary butyl hydroperoxide stepwise such that is a temperature increase of 2°C/min.

After the isotherm is completed addition is made of a free radical initiator 0.15 g (0.12 pphm 2,2'-Azobis(2-methylbutyronitrile), CAS: 13472-08-7)) and the emulsion held at 85°C for 75 minutes.

Vacuum distillation is carried out to remove water and volatile solvent to give a final product of 50% polymer solids.

To this product addition is made of 16.3 g (12.8 pphm) fatty alcohol ethoxylate.

All dispersions are prepared according to the same process as the one described above for dispersion 1.

**Table 1: Dispersions 1 to 3 and Comparative Examples CE1**

| **example** | **Sorbitan Monooleate (pphm)** | **Stabilizing surfactant B (pphm)** | **Polymeric stabilizer (pphm)** | **Associative monomer 1 (pphm)** |
|---|---|---|---|---|
| CE 1 | 8.6 | | 12.27 | |
| Dispersion 1 | | 8.6 | 12.27 | |
| Dispersion 2 | | 8.6 | 2.0 | |
| Dispersion 3 | | 8.6 | 2.0 | 6.0 |

Associative monomer 1: methacrylate of a C16-C18 fatty alcohol mixture, ethoxylated with 25 moles of ethylene oxide

5 ml of the inventive inverse polymer dispersion with 50 weight% solid polymer content (including emulsifier and all initiators) was added to 497 ml water aand stirred for 10 minutes at room temperature. After additional 30 minutes or rest the viscosity was measured as given above.

**Table 2: Viscosities and viscosity slope of dispersions 1 to 3 and CE1**

| **example** | **Viscosity (mPa*s) 0,5 % in water At 20 rpm, spindle 6** |
|---|---|
| CE 1 | 9100 |
| Dispersion 1 | 18200 |
| Dispersion 2 | 14300 |
| Dispersion 3 | 14650 |

**Table 3: Storage Stability of dispersions 1 to 3 and CE1 :**

| **Example** | **Stability After 2 weeks at 25°C** | **Stability After 2 months at 25°C** | **Stability After 8 months at 25°C** |
|---|---|---|---|
| CE 1 | Little serum, re-dispersable | serum, sediment, not redispersable | serum, sediment, not redispersable |
| Dispersion 1 | stable | stable | Little serum, little redispersable sedimentationn |
| Dispersion 2 | stable | stable | Little serum, little redispersable sedimentatio |
| Dispersion 3 | stable | stable | Stable, no serum, no sedimentation |

If after storage time there is no solvent on top of the dispersion without polymer particles, called serum, and no polymer particles sedimented down after storage at room temperature and no coagulum formed by aggregation of 2 or more particles the inverse polymer dispersion is called stable.

## Claims

1. An inverse dispersion comprising
i) at least one anionic or one nonionic polymer obtainable by the polymerization of
a) at least one anionic monomer and / or at least one nonionic monomer (compound A),
b) optionally at least one crosslinker (compound B),
c) optionally at least one chain transfer agent (compound C),
ii) at least one stabilizing agent, wherein the stabilizing agent has one or more hydrophobic chains with more than 30 carbon atoms,
iii) at least one non-aqueous carrier.

2. The inverse dispersion according to Claim 1, wherein the stabilizing agent has one or more hydrophobic chains with more than 50 carbon atoms.

3. The inverse dispersion according to Claim 1 or 2, wherein the weight ratio of anionic monomer to nonionic monomer lies in the range of from 0/100 to 10/90.

4. The inverse dispersion according to any one of Claims 1 to 3, wherein in the anionic monomer is selected from acrylic acid, methacrylic acid, itaconic acid, maleic acid or a salt thereof.

5. The inverse dispersion according to any one of Claims 1 to 4, wherein anionic monomer is sodium acrylate.

6. The inverse dispersion according to any one of Claims 1 to 5, wherein the nonionic monomer is selected from N-vinylpyrrolidone, N-vinylimidazole or a compound according to the formula (II) 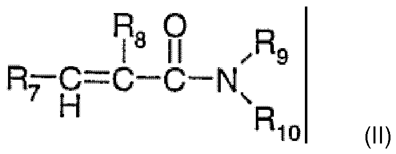 where
R₇ is H or C₁-C₄-alkyl,
R₈ is H or methyl, and
R₉ and R₁₀, independently of one another, are H or C₁-C₃₀-alkyl.

7. The inverse dispersion according to any one of Claims 1 to 6, wherein the nonionic monomer is acrylamide.

8. The inverse dispersion according to any one of Claims 1 to 7, wherein compound b) is selected from divinylbenzene; tetraallylammonium chloride; allyl acrylates; allyl methacrylates; diacrylates and dimethacrylates of glycols or polyglycols; butadiene; 1,7-octadiene, allylacrylamides or allylmethacrylamides; bisacrylamidoacetic acid; N,N'-methylenebisacrylamide or polyol polyallyl ethers.

9. The inverse dispersion according to any one of Claims 1 to 8, wherein compound c is selected from mercaptans, lactic acid, formic acid, isopropanol or hypophosphites.

10. The inverse dispersion according to any one of Claims 1 to 9, wherein the stabilizing agent has a hydrophilic-lipophilic balance value of from 3 to 9.

11. The inverse dispersion according to any one of Claims 1 to 10, wherein the stabilizing agent has a hydrophilic-lipophilic balance value of from 5 to 7.

12. The inverse dispersion according to any one of Claims 1 to 11, wherein the stabilizing agent has a block-, graft- or comb-structure.

13. The inverse dispersion according to any one of Claims 1 to 12, wherein the stabilizing agent has an ABA block-structure based on polyhydroxystearic acid as A block and poly alkylene oxide as B block.

14. The inverse dispersion according to any one of Claims 1 to 13, wherein from 10% to 100% by weight based on the total weight of the anionic or nonionic polymer are water-soluble polymers.

15. The inverse dispersion according to Claim 14, wherein the water-soluble polymers of the anionic or nonionic polymer have a sedimentation coefficient of from 0.1 to 100Sved in aqueous media.

16. The inverse dispersion according to any one of Claims 1 to 13, wherein from 0% to 90% by weight based on the total weight of the anionic or nonionic polymer are crosslinked water-swellable polymers.

17. The inverse dispersion according to Claim 16, wherein the crosslinked water-swellable polymers of the anionic or nonionic polymer have a sedimentation coefficient of more than 300Sved in aqueous media.

18. A process for the manufacture of an inverse dispersion comprising
i) at least one anionic or one nonionic polymer obtainable by a polymerisation of
a) at least one anionic monomer and /or at least one nonionic monomer,
b) optionally at least one crosslinker,
c) optionally at least one chain transfer agent,
ii) at least one stabilizing agent, wherein the stabilizing surfactant has one or more hydrophobic chains with more than 50 carbon atom
iii) at least one non-aqueous carrier,
wherein the inverse dispersion is obtained by inverse emulsion polymerization, optionally followed by distillation by means of the liquid dispersion polymer technology.
